(19) **Europäisches Patentamt European Patent Office Office européen des brevets**

(11) **EP 4 142 036 B1**

(12) **EUROPEAN PATENT SPECIFICATION**

(45) Date of publication and mention
of the grant of the patent:
**08.07.2026 Bulletin 2026/28**

(21) Application number: **21856304.7**

(22) Date of filing: **13.08.2021**

(51) International Patent Classification (IPC):
*H01M 50/446* (2021.01)    *H01M 50/449* (2021.01)
*H01M 50/431* (2021.01)    *H01G 11/52* (2013.01)
*H01M 50/426* (2021.01)    *H01M 10/0525* (2010.01)
*H01M 50/414* (2021.01)    *H01M 50/417* (2021.01)
*H01M 50/457* (2021.01)    *H01M 50/489* (2021.01)

(52) Cooperative Patent Classification (CPC):
**H01G 11/52; H01M 50/414; H01M 50/417;
H01M 50/426; H01M 50/446; H01M 50/457;
H01M 50/489;** H01M 10/0525; Y02E 60/10

(86) International application number:
**PCT/KR2021/010841**

(87) International publication number:
**WO 2022/035298 (17.02.2022 Gazette 2022/07)**

(54) **SEPARATOR AND ELECTROCHEMICAL DEVICE COMPRISING SAME**

SEPARATOR UND ELEKTROCHEMISCHE VORRICHTUNG DAMIT

SÉPARATEUR ET DISPOSITIF ÉLECTROCHIMIQUE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.08.2020 KR 20200102806**

(43) Date of publication of application:
**01.03.2023 Bulletin 2023/09**

(73) Proprietor: **LG Energy Solution, Ltd.
Seoul 07335 (KR)**

(72) Inventors:
• **LEE, So-Yeong
  Daejeon 34122 (KR)**
• **KIM, Ji-Eun
  Daejeon 34122 (KR)**
• **PARK, So-Jung
  Daejeon 34122 (KR)**
• **SUNG, Dong-Wook
  Daejeon 34122 (KR)**

(74) Representative: **Hoffmann Eitle
Patent- und Rechtsanwälte PartmbB
Arabellastraße 30
81925 München (DE)**

(56) References cited:
WO-A1-2019/130994    WO-A1-2020/096310
KR-A- 20140 097 460    KR-A- 20200 051 370
KR-B1- 102 117 501    US-A1- 2016 254 511
US-A1- 2019 267 595    US-A1- 2020 350 546

**Description**

TECHNICAL FIELD

The present disclosure relates to a separator and an electrochemical device including the same. Particularly, the present disclosure relates to a separator which shows reduced deformation during a lamination process, resulting in a decrease in lamination short defect rate, and an electrochemical device including the same.

The present application claims priority to Korean Patent Application No. 10-2020-0102806 filed on August 14, 2020 in the Republic of Korea.

BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries cause safety-related problems, such as ignition and explosion, due to the use of an organic electrolyte, and have a disadvantage in that they are difficult to manufacture.

More recently, lithium-ion polymer batteries have improved such disadvantages of lithium-ion batteries and have been expected as one of the next-generation batteries. However, such lithium-ion polymer batteries still provide relatively lower capacity as compared to lithium-ion batteries, and particularly show insufficient discharge capacity at low temperature. Therefore, there is an imminent need for improving such a disadvantage.

Although such electrochemical devices have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a cathode and an anode.

To solve the above-mentioned safety problems of an electrochemical device, there has been suggested a separator having a porous organic-inorganic coating layer formed by applying a mixture of an excessive amount of inorganic particles with a binder polymer onto at least one surface of a porous polymer substrate having a plurality of pores.

Meanwhile, according to the related art, a battery has been manufactured by adhering and laminating a separator with an electrode through a lamination process. When the electrode is laminated with the separator and heat and pressure are applied thereto during the lamination process, the binder layer having a pore structure with surface irregularities is adhered to the electrode surface, wherein the adhesion to the electrode is increased as the heat and pressure condition applied during the lamination process is increased. Recently, since the processing rate is increased in order to improve the productivity and the time during which heat is applied to the separator is reduced, the adhesion is ensured by increasing the pressure. However, under these circumstances, there is a concern about deformation caused by high pressure. When the porous polymer substrate used in a separator is liable to heat and pressure during the lamination process, the porous polymer substrate undergoes a significant decrease in thickness and the pores thereof are damaged significantly so that the battery performance and the breakdown voltage of the separator may be degraded, resulting in Hi-pot defects and low-voltage defects. Therefore, there is a need for a solution for improving the above-mentioned problems.

WO 2020/096310 A1 discloses a separator and an electrochemical device comprising same. The separator comprises a porous polymer substrate; a first porous coating layer; and a second porous coating layer, wherein the hardness of first inorganic particles contained in the first porous coating layer is smaller than that of the second inorganic particles contained in the second porous coating layer.

US 2019/267595 A1 discloses a separator and a lithium ion battery. The separator includes a porous substrate; and a porous layer disposed on at least one surface of the porous substrate. The porous layer includes inorganic particles and a binder, and an iron content in the porous layer is not more than 2100 ppm.

DISCLOSURE

Technical Problem

The present disclosure is designed to solve the problems of the related art, and therefore the present disclosure is directed to providing a separator which shows reduced deformation during a lamination process with an electrode, resulting in a decrease in lamination short defect rate.

The present disclosure is also directed to providing an electrochemical device including the separator.

Technical Solution

In one aspect of the present disclosure, there is provided a separator according to any one of the following embodiments.

According to the first embodiment, there is provided a separator including:

a porous polymer substrate provided with a core portion substrate having a plurality of pores, and skin portion substrates disposed on both surfaces of the core portion substrate and having a plurality of pores, wherein both the core portion substrate and the skin portion substrate include first inorganic particles, or only the core portion substrate includes first inorganic particles, and when both the core portion substrate and the skin portion substrate include the first inorganic particles, the core portion substrate includes the first inorganic particles at a higher weight percentage (wt%) as compared to the skin portion substrate; and

a porous coating layer disposed on at least one surface of the porous polymer substrate, and including a plurality of second inorganic particles and a binder polymer disposed partially or totally on the surfaces of the second inorganic particles so that the second inorganic particles may be interconnected and fixed,

wherein the first inorganic particles have a higher Mohs hardness than the Mohs hardness of the second inorganic particles.

According to the second embodiment, there is provided the separator as defined in the first embodiment, wherein the first inorganic particles have a Mohs hardness of 5 or more and the second inorganic particles have a Mohs hardness of less than 5.

According to the third embodiment, there is provided the separator as defined in the first or the second embodiment, wherein the first inorganic particles include silicon oxide (SiO), titanium dioxide (TiO$_2$), zirconia (ZrO$_2$), alumina (Al$_2$O$_3$), barium sulfate (BaSO$_4$), barium titanate (BaTiO$_3$), boehmite, zinc oxide, magnesium oxide, magnesium hydroxide, aluminum hydroxide, or a mixture of two or more of them.

According to the fourth embodiment, there is provided the separator as defined in any one of the first to the third embodiments, wherein the second inorganic particles include barium sulfate (BaSO$_4$), barium titanate (BaTiO$_3$), boehmite, zinc oxide, magnesium oxide, magnesium hydroxide, aluminum hydroxide, or a mixture of two or more of them.

According to the fifth embodiment, there is provided the separator as defined in any one of the first to the fourth embodiments, wherein when both the core portion substrate and the skin portion substrate include the first inorganic particles, the core portion substrate includes the first inorganic particles at a weight percentage (wt%) 20-600 times higher than the weight percentage of the first inorganic particles in the skin portion substrate.

According to the sixth embodiment, there is provided the separator as defined in any one of the first to the fifth embodiments, wherein the core portion substrate includes the first inorganic particles at 10-20 wt%.

According to the seventh embodiment, there is provided the separator as defined in any one of the first to the sixth embodiments, wherein the core portion substrate includes the first inorganic particles at 10-20 wt%, and the skin portion substrate includes the first inorganic particles at 0.1-10 wt%.

According to the eighth embodiment, there is provided the separator as defined in any one of the first to the seventh embodiments, wherein the second inorganic particles have a BET specific surface area of 5-20 m$^2$/g.

According to the ninth embodiment, there is provided the separator as defined in any one of the first to the eighth embodiments, wherein each of the core portion substrate and the skin portion substrate is a polyolefin-based porous polymer substrate.

According to the tenth embodiment, there is provided the separator as defined in any one of the first to the ninth embodiments, wherein each of the core portion substrate and the skin portion substrate has a melt index (MI) of 0.2 g/10 min. or less.

According to the eleventh embodiment, there is provided the separator as defined in any one of the first to the tenth embodiments, wherein the binder polymer includes polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinylalchol, cyanoethyl cellulose, cyanoethyl sucrose, pullulan, carboxymethyl cellulose, or a mixture of two or more of them.

According to the twelfth embodiment of the present disclosure, there is provided an electrochemical device including a cathode, an anode and a separator interposed between the cathode and the anode, wherein the separator is the same as defined in any one of the first to the eleventh embodiments.

According to the thirteenth embodiment, there is provided the electrochemical device as defined in the twelfth embodiment, which is a lithium secondary battery.

Advantageous Effects

In the case of a separator provided with a porous coating layer including inorganic particles and a binder polymer on a porous polymer substrate according to the related art, the porous coating layer is compressed together with the porous substrate during the lamination with an electrode. However, the separator according to an embodiment of the present disclosure is provided with a porous coating layer using inorganic particles having a low hardness so that deformation of the porous coating layer may occur predominantly, thereby preventing deformation of the porous polymer substrate.

In addition, the separator according to an embodiment of the present disclosure includes inorganic particles introduced to the porous polymer substrate, wherein the inorganic particles function as supports to further prevent deformation of the porous polymer substrate.

In the separator according to an embodiment of the present disclosure, since the inorganic particles are introduced to the porous polymer substrate, the porous polymer substrate shows increased wettability, and thus the amount of slurry for a porous coating layer with which the porous polymer substrate is impregnated is increased relatively based on the porous polymer substrate. In this manner, it is possible to protect deformation of the porous polymer substrate, while providing enhanced insulation property.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a separator including:

a porous polymer substrate provided with a core portion substrate having a plurality of pores, and skin portion substrates disposed on both surfaces of the core portion substrate and having a plurality of pores, wherein both the core portion substrate and the skin portion substrate include first inorganic particles, or only the core portion substrate includes first inorganic particles, and when both the core portion substrate and the skin portion substrate include the first inorganic particles, the core portion substrate includes the first inorganic particles at a higher weight percentage (wt%) as compared to the skin portion substrate; and
a porous coating layer disposed on at least one surface of the porous polymer substrate, and including a plurality of second inorganic particles and a binder polymer disposed partially or totally on the surfaces of the second inorganic particles so that the second inorganic particles may be interconnected and fixed, wherein the first inorganic particles have a higher Mohs hardness than the Mohs hardness of the second inorganic particles.

Particularly, the porous polymer substrate may be a porous polymer film substrate or a porous polymer nonwoven web substrate.

The porous polymer film substrate may be a porous polymer film including polyolefin, such as polyethylene, polypropylene, polybutene or polypentene. Such a polyolefin porous polymer film substrate realizes a shut-down function at a temperature of 80-130°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape.

Further, the porous polymer film substrate and porous polymer nonwoven web substrate may be formed of, e.g.,

polyethylene terephthalate, polybutylene terephthalate, polyester, polyacetal, polyamide, polycarbonate, polyimide, polyetherether ketone, polyether sulfone, polyphenylene oxide, polyphenylene sulfide, polyethylene naphthalene, alone or in combination, besides the above-mentioned polyolefins.

There is no particular limitation in the thickness of the porous polymer substrate, the porous polymer substrate has a thickness of 1-100 $\mu$m, particularly 5-50 $\mu$m. Although there is no particular limitation in the size of the pores present in the porous polymer substrate and porosity, the pore size and porosity may be 0.01-50 $\mu$m and 10-95%, respectively.

The porous polymer substrate has a tri-layer laminate structure including a core portion substrate having a plurality of pores, and skin portion substrates disposed on both surfaces of the core portion substrate and having a plurality of pores.

Each of the core portion substrate and the skin portion substrate may have a melt index (MI) of 0.2 g/10 min. or less, 0-0.2 g/10 min, 0.02-0.2 g/10 min., or 0.06-0.2 g/10 min. When the melt index of each of the core portion substrate and the skin portion substrate satisfies the above-defined range, the polymer resin used in the porous polymer substrate may have a high weight average molecular weight to cause an increase in modulus of the separator. Therefore, it is possible to minimize deformation of the porous polymer substrate, and to improve short defects, which may occur after a lamination process, and degradation of life caused by deformation of the separator due to the internal pressure of the battery during the evaluation of the life.

The melt index (melt flow index) may be determined through the ejected amount of the resin used in a porous polymer substrate molten under a pressure of 21.6 kg for 10 minutes.

Both the core portion substrate and the skin portion substrate include the first inorganic particles, or only the core portion substrate includes the first inorganic particles. When the first inorganic particles are introduced to the core portion substrate and the skin portion substrate, impregnation of the porous polymer substrate with slurry for a porous coating layer may be increased through the wettability of the porous polymer substrate improved by the inorganic particles. In addition, when only the core portion substrate includes the first inorganic particles, no inorganic particles exist on the surface of the porous polymer substrate, and thus the separator may provide improved resistance characteristics.

Since the porous polymer substrate includes inorganic particles therein, the inorganic particles function as supports so that deformation of the porous polymer substrate may be minimized during the lamination of an electrode with the separator to prevent the pores from being damaged, and the problem of degradation of the performance of an electrochemical device using the separator may be improved. In addition, impregnation of the porous polymer substrate with slurry for a porous coating layer is increased by the inorganic particles contained in the porous polymer substrate, and the inorganic particles function as insulators in the porous polymer substrate after drying the slurry. Therefore, it is possible to prevent a decrease in breakdown voltage of the separator, and thus to improve Hi-pot defects and low-voltage defects.

When both the core portion substrate and the skin portion substrate include the first inorganic particles, the core portion substrate includes the first inorganic particles at a higher weight percentage (wt%) as compared to the skin portion substrate.

According to an embodiment of the present disclosure, the weight percentage of the first inorganic particles in the core portion substrate may be 20-600 times higher or 30-300 times higher than the weight percentage of the first inorganic particles in the skin portion substrate. When the ratio of the weight percentage of the first inorganic particles in the core portion substrate to the weight percentage of the first inorganic particles in the skin portion substrate satisfies the above-defined range, it is possible to minimize deformation of the porous polymer substrate, to improve the resistance of the separator, and to improve the breakdown voltage characteristics.

Particularly, when only the core portion substrate includes the first inorganic particles, the core portion may include the first inorganic particles in an amount of 10-20 wt%, or 12-18 wt%.

In addition, when both the core portion substrate and the skin portion substrate include the first inorganic particles, the core portion may include the first inorganic particles in an amount of 10-20 wt%, or 12-18 wt%, while the skin portion substrate may include the first inorganic particles in an amount of 0.1-10 wt%, or 0.5-7 wt%.

The separator according to the present disclosure includes a porous coating layer disposed on at least one surface of the porous polymer substrate, and including a plurality of second inorganic particles and a binder polymer disposed partially or totally on the surfaces of the second inorganic particles so that the second inorganic particles may be interconnected and fixed.

In the separator according to an embodiment of the present disclosure, the binder polymer used for forming the porous coating layer may be one used currently for forming a porous coating layer in the art. Particularly, a polymer having a glass transition temperature ($T_g$) of -200 to 200°C may be used. This is because such a polymer can improve the mechanical properties, such as flexibility and elasticity, of the finally formed porous coating layer. Such a binder polymer functions as a binder which connects and stably fixes the inorganic particles with one another, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 MPa$^{1/2}$ or 15-25 MPa$^{1/2}$ and 30-45 MPa$^{1/2}$. Therefore, hydrophilic polymers having many polar groups may be used more frequently as compared to hydrophobic polymers, such as polyolefins. When the solubility parameter is less than 15 MPa$^{1/2}$ and more than 45 MPa$^{1/2}$, it is difficult for the binder polymer to be swelled with a conventional liquid electrolyte for a battery.

Non-limiting examples of the binder polymer include, but are not limited to: polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinylalchol, cyanoethyl cellulose, cyanoethyl sucrose, pullulan, carboxymethyl cellulose, or a mixture of two or more of them.

The first inorganic particles have a higher Mohs hardness as compared to the second inorganic particles. Particularly, the first inorganic particles may have a Mohs hardness of 5 or more, 5-10, or 5.5-9, and the second inorganic particles have a Mohs hardness of less than 5, or 2.5-4.

As used herein, the term 'Mohs hardness' refers to a value of hardness evaluated by comparing the hardness of a material to those of 10 types of minerals as standard materials (Mohs hardness 1: talc, Mohs hardness 2: gypsum, Mohs hardness 3: calcite, Mohs hardness 4: fluorite, Mohs hardness 5: apatite, Mohs hardness 6: orthoclase, Mohs hardness 7: quartz, Mohs hardness 8: topaz, Mohs hardness 9: corundum, and Mohs hardness 10: diamond). When rubbing a sample to be evaluated against a standard material, the material generating scratches was judged to have a lower hardness. In addition, when it is difficult to determine the Mohs hardness of a material directly, the material is analyzed for its composition and its hardness may be determined from another material having the same composition.

When the first inorganic particles have a higher Mohs hardness as compared to the second inorganic particles, it is possible to prevent deformation of the porous polymer substrate, caused by deformation of the porous coating layer using the second inorganic particles.

When the second inorganic particles have a Mohs hardness of higher than 5, the inorganic particles having such a high Mohs hardness and contained in the porous coating layer reduces deformation of the porous coating layer during the lamination process of the separator, but causes damages to the porous polymer substrate, resulting in degradation of dielectric properties, deformation of the pores of the porous polymer substrate, and degradation of the life characteristics of the electrochemical device using the separator.

When the second inorganic particles have a Mohs hardness of less than 5, it is possible to prevent deformation of the porous polymer substrate relatively due to the deformation of the second inorganic particles in the porous coating layer during the lamination process, which is favorable in terms of the hi-pot characteristics and life characteristics of the separator.

According to an embodiment of the present disclosure, any combination of the first inorganic particles with the second inorganic particles may be selected with no particular limitation, as long as the first inorganic particles have a higher Mohs hardness than the Mohs hardness of the second inorganic particles.

Particularly, non-limiting examples of the first inorganic particles include silicon oxide (SiO) (Mohs hardness: 7.0), titanium dioxide (TiO$_2$) (Mohs hardness: 5.5-7.5), zirconia (ZrO$_2$) (Mohs hardness: 8-8.5), alumina (Al$_2$O$_3$) (Mohs hardness: 9.0), barium sulfate (BaSO$_4$) (Mohs hardness: 3.3), barium titanate (BaTiO$_3$) (Mohs hardness: 5), boehmite (AlO(OH)) (Mohs hardness: 3.5-4), zinc oxide (ZnO) (Mohs hardnesss: 4.5), magnesium oxide (MgO) (Mohs hardness: 4), magnesium hydroxide (Mg(OH)$_2$) (Mohs hardness: 2.5), aluminum hydroxide (Al(OH)$_3$) (Mohs hardness: 2.5-3.5), or a mixture of two or more of them.

In addition, non-limiting examples of the second inorganic particles include barium sulfate (BaSO$_4$) (Mohs hardness: 3.3), barium titanate (BaTiO$_3$) (Mohs hardness: 5), boehmite (AlO(OH)) (Mohs hardness: 3.5-4), zinc oxide (ZnO) (Mohs hardnesss: 4.5), magnesium oxide (MgO) (Mohs hardness: 4), magnesium hydroxide (Mg(OH)$_2$) (Mohs hardness: 2.5), aluminum hydroxide (Al(OH)$_3$) (Mohs hardness: 2.5-3.5), or a mixture of two or more of them.

According to an embodiment of the present disclosure, the first inorganic particles may have a BET specific surface area of 175-275 m$^2$/g, 175-225 m$^2$/g, or 225-275 m$^2$/g.

The first inorganic particles are used in the porous polymer substrate, and the method for preparing the porous polymer substrate includes a step of mixing the first inorganic particles with a polymer resin, followed by melting and extrusion. Therefore, when the first inorganic particles have a BET specific surface area within the above-defined range, the first inorganic particles cause no blocking in the extruder during the melting and extrusion, and may be mixed homogeneously in the polymer resin, thereby providing improved processability.

According to an embodiment of the present disclosure, the second inorganic particles may have a BET specific surface area of 5-20 m$^2$/g, 5 m$^2$/g or more, 10 m$^2$/g or more, or 11 m$^2$/g or more, and 20 m$^2$/g or less, 15 m$^2$/g or less, or 14 m$^2$/g or less.

When the second inorganic particles have a BET specific surface area within the above-defined range, the packing density of the second inorganic particles in the porous coating layer and the thickness of the porous coating layer may be retained adequately to prevent the problems of damages to the porous polymer substrate and degradation of dielectric properties. In addition, such an adequate specific surface area facilitates phase separation of the binder polymer, and thus the porous coating layer in the separator may have a high peel strength.

Herein, the BET specific surface area of the first inorganic particles and that of the second inorganic particles may be calculated from the nitrogen gas adsorption at the temperature of liquid nitrogen (77 K) by using BELSORP-mino II available from BEL Japan Co.

Although there is no particular limitation in the thickness of the porous coating layer, the thickness may be 1-10 μm, or 1.5-6 μm. Also, the porosity of the porous coating layer is not particularly limited, but it may be preferably 35-65%.

In the separator according to an embodiment of the present disclosure, the porous coating layer may further include other additives as ingredients thereof, besides the above-described inorganic particles and polymer.

According to an embodiment of the present disclosure, the porous coating layer may be an organic coating layer using organic slurry or an aqueous coating layer using aqueous slurry. Particularly, in the case of an aqueous coating layer, it is more advantageous in that thin film coating is facilitated and the resistance of the separator is reduced. In addition, when using organic slurry, it is required to select an organic solvent in which the low-absorbent polymer of the shell portion is not dissolved.

Hereinafter, a method for manufacturing the separator according to an embodiment of the present disclosure will be explained.

To form the porous coating layer, the binder polymer is dissolved in a solvent, and then the second inorganic particles are added thereto and dispersed therein to prepare a composition for forming a porous coating layer. The second inorganic particles may be added after they are pulverized in advance to a predetermined average particle diameter. Otherwise, the second inorganic particles may be added to a binder polymer solution, and then pulverized and dispersed, while controlling them to have a predetermined diameter by using, e.g., a ball milling process.

In addition, prepared is a porous polymer substrate provided with a core portion substrate having a plurality of pores and skin portion substrates disposed on both surfaces of the core portion substrate and having a plurality of pores, wherein both the core portion substrate and the skin portion substrate include the first inorganic particles, or only the core portion substrate includes the first inorganic particles, and when both the core portion substrate and the skin portion substrate include the first inorganic particles, the core portion substrate includes the first inorganic particles at a higher weight percentage as compared to the skin portion substrate. Such a porous polymer substate may be obtained by the conventional methods for manufacturing a multi-layer porous polymer substrate, for example, through co-extrusion using three extruders. Herein, in the extruder for the core portion substrate and in the extruders for the skin portion substrates disposed on both surfaces of the core portion substrate, each polymer for the corresponding substrate may be mixed with an adequate amount of first inorganic particles as necessary, and then co-extrusion may be carried out.

Then, the composition for forming a porous coating layer is coated on the porous polymer substrate. Although there is no particular limitation in the coating process, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through, e.g., a Mayer bar, after dipping.

Then, the porous polymer substrate coated with the composition for forming a porous coating layer may be dried in a dryer, such as an oven, to form a porous coating layer on at least one surface of the porous polymer substrate.

According to an embodiment of the present disclosure, the binder of the porous coating layer attaches the second inorganic particles to one another so that they may retain their binding states (i.e. the binder interconnects and fixes the second inorganic particles), and the second inorganic particles may be bound to the porous polymer substrate by the binder. The second inorganic particles of the porous coating layer may form interstitial volumes, while they are substantially in contact with one another. Herein, the interstitial volume means a space defined by second the inorganic particles that are in contact with one another substantially in a closely packed or densely packed structure of the second inorganic particles. The interstitial volumes among the second inorganic particles become vacant spaces to form pores.

Non-limiting examples of the solvent that may be used herein include any one compound selected from acetone, tetrahydrofuran, methylene chloride, chloroform, dimethyl formamide, N-methyl-2-pyrrolidone, methyl ethyl ketone, cyclohexane, methanol, ethanol, isopropyl alcohol, propanol and water, or a mixture of two or more of them.

After coating the composition for forming a porous coating layer on the porous polymer substrate, the solvent may be removed by carrying out drying at 90-180°C, particularly 100-150°C.

In another aspect of the present disclosure, there is provided an electrochemical device including a cathode, an anode and a separator interposed between the cathode and the anode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, cathode and anode, used in combination with the separator according to the present disclosure are not particularly limited, and may be obtained by allowing electrode active materials to be bound to an electrode current collector through a method generally known in the art. Among the electrode active materials, non-limiting examples of a cathode active material include conventional cathode active materials that may be used for the cathodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of an anode active material include conventional anode active materials that may be used for the anodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a cathode current collector include foil made of aluminum, nickel or a combination thereof. Non-limiting examples of an anode current collector include foil made of copper, gold, nickel, copper alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples, however, should not be construed as limited to the exemplary embodiments set forth therein.

**Example 1**

(1) Preparation of Porous Polymer Substrate

Prepared was a tri-layer porous polymer substrate provided with a core portion substrate including polyethylene (melt index 0.06 g/10 min.) and SiO (Mohs hardness: 7.0) as first inorganic particles and skin portion substrates disposed on both surfaces of the core portion substrate and having a plurality of pores, wherein the core portion substrate and the skin portion substrates include the first inorganic particles, and the weight percentage (wt%) of the first inorganic particles in the core portion substrate, weight percentage (wt%) of the first inorganic particles in the skin portion substrate and the total thickness are the same as shown in the following Table 1. Herein, in the prepared porous polymer substrate, the core portion substrate, the upper skin portion substrate and the lower skin portion substrate formed on both surfaces of the core portion substrate had a thickness of 10 $\mu$m, 1 $\mu$m and 1 $\mu$m, respectively.

In Table 1, the content (wt%) of the first inorganic particles in the skin portion substrate refers to the content in one side of the skin portion substrates, and is the same as the content (wt%) of the first inorganic particles based on the total weight of the upper and lower skin portion substrates.

(2) Preparation of Slurry for Porous Coating Layer

Polyvinylidene fluoride-co-hexafluoropropylene (PVDF-HFP) (weight average molecular weight 390,000, HFP content 8 wt%) and polyvinylidene fluoride-co-chlorotrifluoroethylene (PVDF-CTFE) (weight average molecular weight 450,000, CTFE content 20 wt%), as binder polymers, cyanoethylvinyl alcohol as a dispersant (also functioning as a binder polymer) and a coupling agent (Ti-CA) (trade name Tytan CP-219 (Titanate Coupling Agent) Borica, available from Borica Co., Ltd.) were added to acetone and dissolved therein at 50°C for about 12 hours or more to prepare a binder polymer solution. Next, $BaSO_4$ (Mohs hardness 3.3., average particle diameter 800 nm) as second inorganic particles was added to the resultant binder polymer solution and dispersed therein to prepare slurry for a porous coating layer. Herein, the weight ratio of PVDF-HFP:PVDF-CTFE:dispersant:coupling agent:second inorganic particles was 21:7:1:1:70.

(3) Manufacture of Separator

The resultant slurry was coated on both surfaces of the polyethylene porous substrate prepared as described above through dip coating, and dried under the condition of a relative humidity of 50% at a temperature of 23°C for 2 hours to obtain a separator provided with porous coating layers on both surfaces thereof (thickness of each porous coating layer: about 3 μm).

### Example 2

A porous polymer substrate, a slurry for a porous coating layer and a separator were obtained in the same manner as Example 1, except that the conditions, such as the first inorganic particles, the second inorganic particles, porous polymer substrate and loading were controlled as shown in Table 1.

### Example 3

A porous polymer substrate, a slurry for a porous coating layer and a separator were obtained in the same manner as Example 1, except that the conditions, such as the first inorganic particles, the second inorganic particles, porous polymer substrate and loading were controlled as shown in Table 1.

### Example 4

A porous polymer substrate, a slurry for a porous coating layer and a separator were obtained in the same manner as Example 1, except that the conditions, such as the first inorganic particles, the second inorganic particles, porous polymer substrate and loading were controlled as shown in Table 1.

### Comparative Example 1

A slurry for a porous coating layer and a separator were obtained in the same manner as Example 1, except that a single layer-type porous polymer substrate was prepared by using polyethylene (melt index 0.49 g/10 min.) free from the first inorganic particles, $Al_2O_3$ particles (Mohs hardness 9.0, average particle diameter 500 nm) were used as the second inorganic particles in the slurry for a porous coating layer, and the conditions, such as the BET specific surface area of the second inorganic particles and porous coating layer loading, as shown in Table 1 were used.

### Comparative Example 2

A slurry for a porous coating layer and a separator were obtained in the same manner as Example 1, except that a single layer-type porous polymer substrate was prepared by using polyethylene (melt index 0.49 g/10 min.) free from the first inorganic particles, SiO particles (Mohs hardness 7.0, average particle diameter 500 nm) were used as the second inorganic particles in the slurry for a porous coating layer, and the conditions, such as the BET specific surface area of the second inorganic particles and porous coating layer loading, as shown in Table 1 were used.

### Comparative Example 3

A slurry for a porous coating layer and a separator were obtained in the same manner as Example 1, except that a single layer-type porous polymer substrate was prepared by using polyethylene (melt index 0.49 g/10 min.) free from the first inorganic particles, and the conditions, such as the BET specific surface area of the second inorganic particles and porous coating layer loading, as shown in Table 1 were used.

### Comparative Example 4

A slurry for a porous coating layer and a separator were obtained in the same manner as Example 1, except that a single layer-type porous polymer substrate was prepared by using polyethylene (melt index 0.49 g/10 min.) including $BaSO_4$ (Mohs hardness 3.3, average particle diameter 800 nm) as the first inorganic particles, wherein the content of the first inorganic particles in the porous polymer substrate was 16 wt%, and the conditions, such as the BET specific surface area of the second inorganic particles and porous coating layer loading, as shown in Table 1 were used.

## Comparative Example 5

A slurry for a porous coating layer and a separator were obtained in the same manner as Example 1, except that a single layer-type porous polymer substrate was prepared by using polyethylene (melt index 0.32 g/10 min.) including BaSO$_4$ (Mohs hardness 3.3, average particle diameter 800 nm) as the first inorganic particles, wherein the content of the first inorganic particles in the porous polymer substrate was 16 wt%, and the conditions, such as the BET specific surface area of the second inorganic particles and porous coating layer loading, as shown in Table 1 were used.

## Comparative Example 6

A slurry for a porous coating layer and a separator were obtained in the same manner as Example 1, except that a single layer-type porous polymer substrate was prepared by using polyethylene (melt index 0.23 g/10 min.) including BaSO$_4$ (Mohs hardness 3.3, average particle diameter 800 nm) as the first inorganic particles, wherein the content of the first inorganic particles in the porous polymer substrate was 16 wt%, and the conditions, such as the BET specific surface area of the second inorganic particles and porous coating layer loading, as shown in Table 1 were used.

## Comparative Example 7

A slurry for a porous coating layer and a separator were obtained in the same manner as Example 1, except that a single layer-type porous polymer substrate was prepared by using polyethylene (melt index 0.06 g/10 min.) including BaSO$_4$ (Mohs hardness 3.3, average particle diameter 800 nm) as the first inorganic particles, wherein the content of the first inorganic particles in the porous polymer substrate was 16 wt%, and the conditions, such as the BET specific surface area of the second inorganic particles and porous coating layer loading, as shown in Table 1 were used.

## Comparative Example 8

A slurry for a porous coating layer and a separator were obtained in the same manner as Example 1, except that a single layer-type porous polymer substrate was prepared by using polyethylene (melt index 0.11 g/10 min.) including BaSO$_4$ (Mohs hardness 3.3, average particle diameter 800 nm) as the first inorganic particles, wherein the content of the first inorganic particles in the porous polymer substrate was 4 wt%, and the conditions, such as the BET specific surface area of the second inorganic particles and porous coating layer loading, as shown in Table 1 were used.

## Comparative Example 9

A slurry for a porous coating layer and a separator were obtained in the same manner as Example 1, except that a single layer-type porous polymer substrate was prepared by using polyethylene (melt index 0.11 g/10 min.) including BaSO$_4$ (Mohs hardness 3.3, average particle diameter 800 nm) as the first inorganic particles, wherein the content of the first inorganic particles in the porous polymer substrate was 23 wt%, and the conditions, such as the BET specific surface area of the second inorganic particles and porous coating layer loading, as shown in Table 1 were used.

## Comparative Example 10

A slurry for a porous coating layer and a separator were obtained in the same manner as Example 1, except that a single layer-type porous polymer substrate was prepared by using polyethylene (melt index 0.11 g/10 min.) including BaSO$_4$ (Mohs hardness 3.3, average particle diameter 800 nm) as the first inorganic particles, wherein the content of the first inorganic particles in the porous polymer substrate was 11 wt%, and the conditions, such as the BET specific surface area of the second inorganic particles and porous coating layer loading, as shown in Table 1 were used.

## Comparative Example 11

A slurry for a porous coating layer and a separator were obtained in the same manner as Example 1, except that a single layer-type porous polymer substrate was prepared by using polyethylene (melt index 0.11 g/10 min.) including BaSO$_4$ (Mohs hardness 3.3, average particle diameter 800 nm) as the first inorganic particles, wherein the content of the first inorganic particles in the porous polymer substrate was 16 wt%, and the conditions, such as the BET specific surface area of the second inorganic particles and porous coating layer loading, as shown in Table 1 were used.

## Comparative Example 12

A porous polymer substrate, a slurry for a porous coating layer and a separator were obtained in the same manner as Example 1, except that the conditions, such as the weight percentage of the first inorganic particles in each of the core portion substrate and skin portion substrate of the porous polymer substrate, BET specific surface area of the second inorganic particles and porous coating layer loading were controlled as shown in Table 1.

## Comparative Example 13

A porous polymer substrate, a slurry for a porous coating layer and a separator were obtained in the same manner as Example 1, except that the conditions, such as the weight percentage of the first inorganic particles in each of the core portion substrate and skin portion substrate of the porous polymer substrate, BET specific surface area of the second inorganic particles and porous coating layer loading were controlled as shown in Table 1.

## Comparative Example 14

A porous polymer substrate, a slurry for a porous coating layer and a separator were obtained in the same manner as Example 1, except that the conditions, such as the weight percentage of the first inorganic particles in each of the core portion substrate and skin portion substrate of the porous polymer substrate, BET specific surface area of the second inorganic particles and porous coating layer loading were controlled as shown in Table 1.

## Comparative Example 15

A porous polymer substrate, a slurry for a porous coating layer and a separator were obtained in the same manner as Example 1, except that the conditions, such as the weight percentage of the first inorganic particles in each of the core portion substrate and skin portion substrate of the porous polymer substrate, BET specific surface area of the second inorganic particles and porous coating layer loading were controlled as shown in Table 1.

## Comparative Example 16

A porous polymer substrate, a slurry for a porous coating layer and a separator were obtained in the same manner as Example 1, except that the conditions, such as the weight percentage of the first inorganic particles in each of the core portion substrate and skin portion substrate of the porous polymer substrate, BET specific surface area of the second inorganic particles and porous coating layer loading were controlled as shown in Table 1.

## Comparative Example 17

A slurry for a porous coating layer and a separator were obtained in the same manner as Example 1, except that a single layer-type porous polymer substrate was prepared by using polyethylene (melt index 0.06 g/10 min.) including $BaSO_4$ (Mohs hardness 3.3, average particle diameter 800 nm) as the first inorganic particles, wherein the content of the first inorganic particles in the porous polymer substrate was 14 wt%, and the conditions, such as the BET specific surface area of the second inorganic particles and porous coating layer loading, as shown in Table 1 were used.

## Comparative Example 18

A slurry for a porous coating layer and a separator were obtained in the same manner as Example 1, except that a single layer-type porous polymer substrate was prepared by using polyethylene (melt index 0.06 g/10 min.) including $BaSO_4$ (Mohs hardness 3.3, average particle diameter 800 nm) as the first inorganic particles, wherein the content of the first inorganic particles in the porous polymer substrate was 14 wt%, and the conditions, such as the BET specific surface area of the second inorganic particles and porous coating layer loading, as shown in Table 1 were used.

## Evaluation of Separators

Each of the separators according to Examples 1-4 and Comparative Examples 1-18 was evaluated in terms of the following characteristics. The results are shown in Table 1.

(1) Decrease in Thickness

A thickness gauge was used to measure the thickness of the porous polymer substrate and that of the porous coating layer of the separator according to each of Examples 1-4 and Comparative Examples 1-18 at the initial state and after lamination, and then a decrease (%) in thickness was calculated by the ratio of a decrement of thickness after lamination based on the initial thickness according to the following formula. Herein, the lamination was carried out by using a hot press under the conditions of 90°C and 4 MPa for 1 second.

Decrease (%) in thickness = (Initial thickness - Thickness after lamination) / Initial thickness

(2) Breakdown Voltage (BDV) (V)

Each of the separators according to Examples 1-4 and Comparative Examples 1-18 was laminated with SUS mesh at 90°C under 4 MPa for 1 second by using a hot press, and the voltage was increased from 0 V at a rate of 100 V/s. Herein, when the voltage reached 6 kV, or when a current of 0.5 mA or more did not flow for 3 seconds, it was judged that dielectric breakdown occurred, and the voltage at that time was measured. The voltage was defined as breakdown voltage.

(3) Adhesion to Electrode

An active material (natural graphite and artificial graphite, weight ratio 5:5), a conductive material (super P) and a binder (polyvinylidene fluoride (PVDF)) were mixed at a weight ratio of 92:2:6, and the resultant mixture was dispersed in water to prepare anode slurry. The prepared anode slurry was coated on copper foil to obtain an anode. The anode was cut into a size of 15 mm x 100 mm.

Each of the separators according to Examples 1-4 and Comparative Examples 1-18 was cut into a size of 10 mm x 100 mm.

The prepared separator was laminated with the anode, and the resultant laminate was inserted between polyethylene terephthalate (PET) films having a thickness of 100 $\mu$m and adhered thereto by using a flat press through heating at 90°C under a pressure of 6.5 MPa for 1 second.

The end portion of the adhered separator and anode was mounted to an UTM instrument (LLOYD Instrument LF Plus), and then the force (adhesion to electrode) required for separating the separator from the anode was determined at a rate of 300 mm/min under the condition of 180° peel.

When the separator ensures an adhesion to electrode of 50 gf/25 mm or more, it is possible to assemble a battery through adhesion of electrodes.

(4) Porous Coating Layer Loading

In each of the separators according to Examples 1-4 and Comparative Examples 1-18, the weight of the second inorganic particles and the binder coated on the porous polymer substrate per unit weight was measured.

(5) Air Permeability

Each of the separators according to Examples 1-4 and Comparative Examples 1-18 was determined for its air permeability by using EG01-55-1MR available from Asahi Seico Co. An air permeability of 2000 s/100 cc or more may cause degradation of the output of a battery and cycle fading.

(6) Resistance

Each of the separators according to Examples 1-4 and Comparative Examples 1-18 was dipped in an electrolyte (ethylene carbonate (EC):diethyl carbonate (DEC) = 3:7, 1.0 M $LiPF_6$), and then the AC resistance was measured. Herein, 'AC resistance' is a resistance value measured at 1 KHz by electric impedance spectroscopy (EIS, available from Ametek Co.).

(7) Melt Index (MI)

In each of the separators according to Examples 1-4 and Comparative Examples 1-18, the polymer resin used in the porous polymer substrate was determined for its melt index (melt flow index) through the ejected amount of the polymer resin from the porous polymer substrate molten under a pressure of 21.6 kg for 10 minutes. As the polymer resin has a higher molecular weight, it shows a lower melt index (MI).

(8) Peel Strength

Each of the separators according to Examples 1-4 and Comparative Examples 1-18 was cut into a size of 15 mm x 100 mm. A double-sided tape was attached to a glass plate, and the separator cut and prepared as mentioned above was attached thereto in such a manner that the porous coating layer surface might be adhered to the adhesive tape. Then, the end portion of the adhered separator was mounted to a UTM instrument (LLOYD Instrument LF Plus), and force was applied at 180° at a rate of 300 mm/min. Then, the force (peel strength) required for separating the porous coating layer from the porous polymer substrate was measured.

(9) Mohs Hardness of Inorganic Particles

'Mohs hardness' refers to a value of hardness evaluated by comparing the hardness of a material to those of 10 types of minerals as standard materials (Mohs hardness 1: talc, Mohs hardness 2: gypsum, Mohs hardness 3: calcite, Mohs hardness 4: fluorite, Mohs hardness 5: apatite, Mohs hardness 6: orthoclase, Mohs hardness 7: quartz, Mohs hardness 8: topaz, Mohs hardness 9: corundum, and Mohs hardness 10: diamond). When rubbing inorganic particles to be evaluated against a standard material, the material generating scratches was judged to have a lower hardness.

(10) BET Specific Surface Area of First Inorganic Particles and Second Inorganic Particles

The BET (Brunauer-Emmett-Teller) specific surface area of the first inorganic particles and that of the second inorganic particles were calculated by using BELSORP-mino II available from BEL Japan Co. from the nitrogen gas adsorption at the temperature (77 K) of liquid nitrogen.

[Table 1]

| | Content of first inorganic particles (wt%) | | Melt index of porous polymer substrate (g/10 min.) | BET specific surface area of first inorganic particles (m²/g) | BET specific surface area of second inorganic particles (m²/g) | Mohs hardness of second inorganic particles | Thickness of porous polymer substrate (μm) | Thickness of porous coating layer (μm) | Porous coating layer loading (g/cm²) | Air permeability (s/100 cc) | Resistance (Ohm) | Adhesion to electrode (gf/25 mm) | Peel strength (gf/15 mm) | Decrease in thickness of porous polymer substrate after lamination (%) | Decrease in thickness of porous coating layer after lamination (%) | BDV (V) |
|---|---|---|---|---|---|---|---|---|---|---|---|---|---|---|---|---|
| | Core portion | Skin portion | | | | | | | | | | | | | | |
| Ex. 1 | 14 | 7 | 0.06 | 225 | 14 | 3.3 | 12 | Both sides 3/3 | 7.2 | 281 | 1,4 | 88 | 90 | 2.5 | 49.0 | 1806 |
| Ex. 2 | 14 | 4 | 0.06 | 225 | 14 | 3.3 | 12 | Both sides 3/3 | 7.0 | 246 | 0.91 | 86 | 87 | 2.4 | 48.9 | 1699 |
| Ex. 3 | 14 | 0 | 0.06 | 225 | 14 | 3.3 | 12 | Both sides 3/3 | 6.6 | 207 | 0.85 | 85 | 88 | 2.8 | 44.5 | 1444 |
| Ex. 4 | 14 | 0 | 0.06 | 225 | 11 | 3.3 | 12 | Both sides 3/3 | 7.5 | 233 | 0.96 | 52 | 54 | 3.1 | 41.6 | 1312 |
| Comp. Ex. 1 | 0 | | 0.49 | 225 | 6 | 9.0 | 12 | Both . sides 3/3 | 7.5 | 233 | 0.96 | 28 | 56 | 30.1 | 12.1 | 25 |
| Comp. Ex. 2 | 0 | | 0.49 | 225 | 7 | 7.0 | 12 | Both sides 3/3 | 7.5 | 252 | 0.94 | 33 | 54 | 26.4 | 18.4 | 54 |
| Comp. Ex. 3 | 0 | | 0.49 | 225 | 9 | 3.3 | 12 | Both sides 3/3 | 7.5 | 244 | 0.95 | 46 | 45 | 15.7 | 30.8 | 347 |
| Comp. Ex. 4 | 16 | | 0.49 | 225 | 9 | 3.3 | 12 | Both sides 3/3 | 8.5 | 270 | 2.5 | 90 | 131 | 14.3 | 30.1 | 641 |
| Comp. Ex. 5 | 16 | | 0.32 | 225 | 9 | 3.3 | 12 | Both sides 3/3 | 8.5 | 265 | 2.7 | 89 | 133 | 8.7 | 22.0 | 736 |
| Comp. Ex. 6 | 16 | | 0.23 | 225 | 9 | 3.3 | 12 | Both sides 3/3 | 8.5 | 281 | 2.4 | 88 | 129 | 4.8 | 47.0 | 764 |
| Comp. Ex. 7 | 16 | | 0.06 | 225 | 9 | 3.3 | 12 | Both sides 3/3 | 8.5 | 274 | 2.5 | 91 | 136 | 2.3 | 51.6 | 1755 |
| Comp. Ex. 8 | 4 | | 0.11 | 225 | 9 | 3.3 | 12 | Both sides 3/3 | 7.7 | 269 | 0.98 | 86 | 70 | 11.9 | 40.6 | 527 |
| Comp. Ex. 9 | 23 | | 0.11 | 225 | 9 | 3.3 | 12 | Both sides 3/3 | 9.0 | 723 | 3.4 | 85 | 145 | 2.2 | 50.9 | 2509 |

EP 4 142 036 B1

(continued)

| | Content of first inorganic particles (wt%) | | Melt index of porous polymer substrate (g/10 min.) | BET specific surface area of first inorganic particles (m²/g) | BET specific surface area of second inorganic particles (m²/g) | Mohs hardness of second inorganic particles | Thickness of porous polymer substrate (μm) | Thickness of porous coating layer (μm) | Porous coating layer loading (g/cm²) | Air permeability (s/100 cc) | Resistance (Ohm) | Adhesion to electrode (gf/25 mm) | Peel strength (gf/15 mm) | Decrease in thickness of porous polymer substrate after lamination (%) | Decrease in thickness of porous coating layer after lamination (%) | BDV (V) |
|---|---|---|---|---|---|---|---|---|---|---|---|---|---|---|---|---|
| | Core portion | Skin portion | | | | | | | | | | | | | | |
| Comp. Ex. 10 | 11 | | 0.11 | 225 | 9 | 3.3 | 12 | Both sides 3/3 | 8.0 | 267 | 1.2 | 90 | 127 | 5.9 | 46.7 | 1380 |
| Comp. Ex. 11 | 16 | | 0.11 | 225 | 9 | 3.3 | 12 | Both sides 3/3 | 8.4 | 307 | 2.2 | 94 | 131 | 3.5 | 48.4 | 1418 |
| Comp. Ex. 12 | 14 | 20 | 225 | 225 | 9 | 12 | 12 | 8.6 | 8.6 | 681 | 2.7 | 141 | 167 | 1.2 | 54.1 | 2381 |
| Comp. Ex. 13 | 0 | 20 | 0.06 | 225 | 9 | 3.3 | 12 | 9.0 | 9.0 | 701 | 3.3 | 91 | 151 | 12.1 | 40.6 | 1361 |
| Comp. Ex. 14 | 0 | 14 | 0.06 | 225 | 9 | 3.3 | 12 | 8.5 | 8.5 | 664 | 2.1 | 93 | 145 | 11.4 | 40.1 | 1306 |
| Comp. Ex. 15 | 0 | 8 | 0.06 | 225 | 9 | 3.3 | 12 | 7.3 | 7.3 | 288 | 1.2 | 84 | 127 | 14.4 | 42.4 | 1112 |
| Comp. Ex. 16 | 0 | 5 | 0.06 | 225 | 9 | 3.3 | 12 | 7.0 | 7.0 | 270 | 1.0 | 84 | 131 | 19.8 | 41.1 | 1099 |
| Comp. Ex. 17 | 14 | | 0.06 | 225 | 16 | 3.3 | 12 | Both sides 3/3 | 7.5 | 1681 | 1.49 | 11 | 37 | 29.1 | 14.4 | 419 |
| Comp. Ex. 18 | 14 | | 0.06 | 225 | 17 | 3.3 | 12 | Both sides 3/3 | 7.5 | 138 | 0.81 | 68 | 53 | 26.2 | 13.9 | 359 |

Referring to Table 1, it can be seen that since each of the separators according to Examples 1-4 shows a large decrease in thickness of the porous coating layer after lamination, while showing a significantly small decrease in thickness of the porous polymer substrate, it is possible to protect deformation of the porous polymer substrate. It can be also seen that each separator shows high dielectric property as determined by a breakdown voltage of 1,000 V or more, and realizes excellent resistance characteristics.

Meanwhile, it can be seen that each of the separators according to Comparative Examples 1-6, Comparative Example 8, Comparative Example 17 and Comparative Example 18 shows a low breakdown voltage of 800 V or less, which suggest that each separator shows degradation of dielectric property. It can be also seen that each of the separators according to Comparative Examples 7, 9 and 11-14 shows a high resistance value, and each of the separators according to Comparative Examples 10, 15 and 16 shows an increase in decrement of thickness of the porous polymer substrate and causes the problem of deformation of the porous polymer substrate.

## Claims

1. A separator comprising:

   a porous polymer substrate provided with a core portion substrate having a plurality of pores, and skin portion substrates disposed on both surfaces of the core portion substrate and having a plurality of pores,
   wherein both the core portion substrate and the skin portion substrate comprise first inorganic particles, or only the core portion substrate comprises first inorganic particles, and when both the core portion substrate and the skin portion substrate include the first inorganic particles, the core portion substrate comprises the first inorganic particles at a higher weight percentage (wt%) as compared to the skin portion substrate; and
   a porous coating layer disposed on at least one surface of the porous polymer substrate, and comprising a plurality of second inorganic particles and a binder polymer disposed partially or totally on the surfaces of the second inorganic particles so that the second inorganic particles are interconnected and fixed,
   wherein the first inorganic particles have a higher Mohs hardness than the Mohs hardness of the second inorganic particles.

2. The separator according to claim 1, wherein the first inorganic particles have a Mohs hardness of 5 or more and the second inorganic particles have a Mohs hardness of less than 5, wherein the Mohs hardness is determined as set out in the description.

3. The separator according to claim 1, wherein the first inorganic particles comprise silicon oxide (SiO), titanium dioxide ($TiO_2$), zirconia ($ZrO_2$), alumina ($Al_2O_3$), barium sulfate ($BaSO_4$), barium titanate ($BaTiO_3$), boehmite, zinc oxide, magnesium oxide, magnesium hydroxide, aluminum hydroxide, or a mixture of two or more of them.

4. The separator according to claim 1, wherein the second inorganic particles comprise barium sulfate ($BaSO_4$), barium titanate ($BaTiO_3$), boehmite, zinc oxide, magnesium oxide, magnesium hydroxide, aluminum hydroxide, or a mixture of two or more of them.

5. The separator according to claim 1, wherein when both the core portion substrate and the skin portion substrate comprise the first inorganic particles, the core portion substrate comprises the first inorganic particles at a weight percentage (wt%) 20-600 times higher than the weight percentage of the first inorganic particles in the skin portion substrate.

6. The separator according to claim 1, wherein the core portion substrate comprises the first inorganic particles at 10-20 wt%.

7. The separator according to claim 5, wherein the core portion substrate comprises the first inorganic particles at 10-20 wt%, and the skin portion substrate comprises the first inorganic particles at 0.1-10 wt%.

8. The separator according to claim 1, wherein the second inorganic particles have a BET specific surface area of 5-20 $m^2/g$, wherein the BET specific surface area is determined as set out in the description.

9. The separator according to claim 1, wherein each of the core portion substrate and the skin portion substrate is a polyolefin-based porous polymer substrate.

**10.** The separator according to claim 1, wherein each of the core portion substrate and the skin portion substrate has a melt index (MI) of 0.2 g/10 min. or less, wherein the melt index is determined as set out in the description.

**11.** The separator according to claim 1, wherein the binder polymer comprises polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinylalchol, cyanoethyl cellulose, cyanoethyl sucrose, pullulan, carboxymethyl cellulose, or a mixture of two or more of them.

**12.** An electrochemical device comprising a cathode, an anode and a separator interposed between the cathode and the anode, wherein the separator is the same as defined in any one of claims 1 to 11.

**13.** The electrochemical device according to claim 12, which is a lithium secondary battery.

**Patentansprüche**

**1.** Separator, umfassend:

ein poröses Polymersubstrat, versehen mit einem Kernsubstratabschnitt, das eine Vielzahl von Poren aufweist, und Hautsubstratabschnitten, die auf beiden Oberflächen des Kernsubstratabschnitts angeordnet sind und eine Vielzahl von Poren aufweisen,
wobei sowohl der Kernsubstratabschnitt als auch die Hautsubstratabschnitte erste anorganische Teilchen umfassen oder nur der Kernsubstratabschnitt erste anorganische Teilchen umfasst, und wenn sowohl der Kernsubstratabschnitt als auch die Hautsubstratabschnitte die ersten anorganischen Teilchen enthalten, der Kernsubstratabschnitt die ersten anorganischen Teilchen in einem höheren Gewichtsanteil (Gew.-%) enthält im Vergleich zu dem Hautsubstratabschnitt; und
eine poröse Beschichtungsschicht, die auf mindestens einer Oberfläche des porösen Polymersubstrats angeordnet ist und eine Vielzahl von zweiten anorganischen Teilchen und ein Bindemittelpolymer umfasst, das teilweise oder vollständig auf den Oberflächen der zweiten anorganischen Teilchen angeordnet ist, so dass die zweiten anorganischen Teilchen miteinander verbunden und fixiert sind,
wobei die ersten anorganischen Teilchen eine höhere Mohs-Härte aufweisen als die zweiten anorganischen Teilchen.

**2.** Separator gemäß Anspruch 1, wobei die ersten anorganischen Teilchen eine Mohs-Härte von 5 oder mehr und die zweiten anorganischen Teilchen eine Mohs-Härte von weniger als 5 aufweisen, wobei die Mohs-Härte wie in der Beschreibung dargelegt bestimmt wird.

**3.** Separator gemäß Anspruch 1, wobei die ersten anorganischen Teilchen Siliziumoxid (SiO), Titandioxid ($TiO_2$), Zirkonia ($ZrO_2$), Aluminiumoxid ($Al_2O_3$), Bariumsulfat ($BaSO_4$), Bariumtitanat ($BaTiO_3$), Böhmit, Zinkoxid, Magnesiumoxid, Magnesiumhydroxid, Aluminiumhydroxid oder eine Mischung aus zwei oder mehr davon umfassen.

**4.** Separator gemäß Anspruch 1, wobei die zweiten anorganischen Teilchen Bariumsulfat ($BaSO_4$), Bariumtitanat ($BaTiO_3$), Böhmit, Zinkoxid, Magnesiumoxid, Magnesiumhydroxid, Aluminiumhydroxid oder eine Mischung aus zwei oder mehr davon umfassen.

**5.** Separator gemäß Anspruch 1, wobei, wenn sowohl der Kernsubstratabschnitt als auch der Hautsubstratabschnitt die ersten anorganischen Teilchen umfassen, der Kernsubstratabschnitt die ersten anorganischen Teilchen in einem Gewichtsanteil (Gew.-%) umfasst, der 20- bis 600-mal höher ist als der Gewichtsanteil der ersten anorganischen Teilchen in dem Hautsubstratabschnitt.

**6.** Separator gemäß Anspruch 1, wobei der Kernsubstratabschnitt die ersten anorganischen Teilchen in einem Gewichtsanteil von 10-20 Gew.-% enthält.

**7.** Separator gemäß Anspruch 5, wobei der Kernsubstratabschnitt die ersten anorganischen Teilchen in einem Gewichtsanteil von 10-20 Gew.-% enthält und der Hautsubstratabschnitt die ersten anorganischen Teilchen in einem Gewichtsanteil von 0,1-10 Gew.-% enthält.

**8.** Separator gemäß Anspruch 1, wobei die zweiten anorganischen Teilchen eine BET-spezifische Oberfläche von 5-20 $m^2/g$ aufweisen, wobei die BET-spezifische Oberfläche wie in der Beschreibung dargelegt bestimmt wird.

**9.** Separator gemäß Anspruch 1, wobei jedes von dem Kernsubstratabschnitt und Hautsubstratabschnitt ein poröses Polymersubstrat auf Polyolefinbasis ist.

**10.** Separator gemäß Anspruch 1, wobei jedes von dem Kernsubstratabschnitt und Hautsubstratabschnitt einen Schmelzindex (MI) von 0,2 g/10 min oder weniger aufweist, wobei der Schmelzindex wie in der Beschreibung dargelegt bestimmt wird.

**11.** Separator gemäß Anspruch 1, wobei das Bindemittelpolymer Polyvinylidenfluorid-co-Hexafluorpropylen, Polyvinylidenfluorid-co-Trichlorethylen, Polymethylmethacrylat, Polybutylacrylat, Polybutylmethacrylat, Polyacrylnitril, Polyvinylpyrrolidon, Polyvinylacetat, Polyethylen-co-Vinylacetat, Polyethylenoxid, Polyarylat, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxymethylcellulose oder eine Mischung aus zwei oder mehr davon umfasst.

**12.** Elektrochemische Vorrichtung, umfassend eine Kathode, eine Anode und einen zwischen der Kathode und der Anode angeordneten Separator, wobei der Separator der gleiche ist, wie in mindestens einem der Ansprüche 1 bis 11 definiert.

**13.** Elektrochemische Vorrichtung gemäß Anspruch 12, die eine Lithium-Sekundärbatterie ist.


**Revendications**

**1.** Séparateur comprenant :

un substrat polymère poreux muni d'un substrat de portion centrale présentant une pluralité de pores, et de substrats de portion de pellicule disposés sur les deux surfaces du substrat de portion centrale et présentant une pluralité de pores,
dans lequel à la fois le substrat de portion centrale et le substrat de portion de pellicule comprennent des premières particules inorganiques, ou seulement le substrat de portion centrale comprend des premières particules inorganiques, et lorsqu'à la fois le substrat de portion centrale et le substrat de portion de pellicule incluent les premières particules inorganiques, le substrat de portion centrale comprend les premières particules inorganiques à un pourcentage en poids (% en poids) supérieur par comparaison avec le substrat de portion de pellicule ; et
une couche de revêtement poreuse disposée sur au moins une surface du substrat polymère poreux, et comprenant une pluralité de deuxièmes particules inorganiques et un polymère liant disposé partiellement ou totalement sur les surfaces des deuxièmes particules inorganiques de manière que les deuxièmes particules inorganiques soient reliées entre elles et fixées,
dans lequel les premières particules inorganiques présentent une dureté Mohs supérieure à la dureté Mohs des deuxièmes particules inorganiques.

**2.** Séparateur selon la revendication 1, dans lequel les premières particules inorganiques présentent une dureté Mohs de 5 ou plus et les deuxièmes particules inorganiques présentent une dureté Mohs inférieure à 5, dans lequel la dureté Mohs est déterminée comme indiqué dans la description.

**3.** Séparateur selon la revendication 1, dans lequel les premières particules inorganiques comprennent de l'oxyde de silicium (SiO), du dioxyde de titane ($TiO_2$), de la zircone ($ZrO_2$), de l'alumine ($Al_2O_3$), du sulfate de baryum ($BaSO_4$), du titanate de baryum ($BaTiO_3$), de la boehmite, de l'oxyde de zinc, de l'oxyde de magnésium, de l'hydroxyde de magnésium, de l'hydroxyde d'aluminium, ou un mélange de deux ou plus de ceux-ci.

**4.** Séparateur selon la revendication 1, dans lequel les deuxièmes particules inorganiques comprennent du sulfate de baryum ($BaSO_4$), du titanate de baryum ($BaTiO_3$), de la boehmite, de l'oxyde de zinc, de l'oxyde de magnésium, de l'hydroxyde de magnésium, de l'hydroxyde d'aluminium, ou un mélange de deux ou plus de ceux-ci.

**5.** Séparateur selon la revendication 1, dans lequel lorsqu'à la fois le substrat de portion centrale et le substrat de portion de pellicule comprennent les premières particules inorganiques, le substrat de portion centrale comprend les premières particules inorganiques à un pourcentage en poids (% en poids) de 20 à 600 fois supérieur au pourcentage en poids des premières particules inorganiques dans le substrat de portion de pellicule.

6. Séparateur selon la revendication 1, dans lequel le substrat de portion centrale comprend les premières particules inorganiques à raison de 10 à 20 % en poids.

7. Séparateur selon la revendication 5, dans lequel le substrat de portion centrale comprend les premières particules inorganiques à raison de 10 à 20 % en poids, et le substrat de portion de pellicule comprend les premières particules inorganiques à raison de 0,1 à 10 % en poids.

8. Séparateur selon la revendication 1, dans lequel les deuxièmes particules inorganiques présentent une surface spécifique BET de 5 à 20 m$^2$/g, dans lequel la surface spécifique BET est déterminée comme indiqué dans la description.

9. Séparateur selon la revendication 1, dans lequel chacun du substrat de portion centrale et du substrat de portion de pellicule est un substrat polymère poreux à base de polyoléfine.

10. Séparateur selon la revendication 1, dans lequel chacun du substrat de portion centrale et du substrat de portion de pellicule présente un indice de fluidité à chaud (MI) de 0,2 g/10 min. ou moins, dans lequel l'indice de fluidité à chaud est déterminé comme indiqué dans la description.

11. Séparateur selon la revendication 1, dans lequel le polymère liant comprend du fluorure de polyvinylidène-co-hexafluoropropylène, du fluorure de polyvinylidène-co-trichloroéthylène, du polyméthacrylate de méthyle, du polybutylacrylate, du polyméthacrylate de butyle, du polyacrylonitrile, de la pyrrolidone de polyvinyle, du polyacétate de vinyle, du polyéthylène-co-acétate de vinyle, du polyoxyde d'éthylène, du polyarylate, de l'acétate de cellulose, du butyrate d'acétate de cellulose, du propionate d'acétate de cellulose, du pullulan cyanoéthylé, de l'alcool polyvinylique cyanoéthylé, de la cellulose cyanoéthylée, du saccharose cyanoéthylé, du pullulan, de la carboxyméthylcellulose, ou un mélange de deux ou plus de ceux-ci.

12. Dispositif électrochimique comprenant une cathode, une anode et un séparateur interposé entre la cathode et l'anode, dans lequel le séparateur est le même que défini dans l'une quelconque des revendications 1 à 11.

13. Dispositif électrochimique selon la revendication 12, qui est une batterie secondaire au lithium.

**EP 4 142 036 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200102806
- WO 2020096310 A1
- US 2019267595 A1